# EUROPEAN PATENT SPECIFICATION

(11) **EP 2 348 932 B1**
(45) Date of publication and mention of the grant of the patent: **07.11.2012**
(21) Application number: 09747915.8
(22) Date of filing: 18.09.2009
(51) Int. Cl.: A47J 31/41, A47J 43/07, A47J 43/12

(54) **AUTOMATIC GROUP FOR INSTANTANEOUS PREPARATION OF HOT MIXTURES OF LIQUID FOOD SUBSTANCES AND A MACHINE EQUIPPED WITH SUCH A GROUP**
AUTOMATISCHES AGGREGAT ZUR SOFORTIGEN ZUBEREITUNG VON HEISSEN MISCHUNGEN AUS FLÜSSIGEN NAHRUNGSMITTELN UND MIT EINEM DERARTIGEN AGGREGAT AUSGESTATTETE MASCHINE
GROUPE AUTOMATIQUE POUR LA PRÉPARATION INSTANTANÉE DE MIXTURES CHAUDES D'ALIMENTS LIQUIDES, ET MACHINE EQUIPÉE AVEC UN TEL GROUPE

(30) Priority: 23.09.2008 IT MI20081689
(43) Date of publication of application: 03.08.2011
(73) Proprietor: BIEPI S.r.l., 24040 Castel Rozzone (IT)
(72) Inventor: ZELIOLI, Giuseppe, 26866 Castiraga Vidardo (Lodi) (IT); DEFENDI, Gianluca, 24047 Treviglio (Bergamo) (IT); PREZZAMÁ, Nicola, 24040 Castel Rozzone (Bergamo) (IT)
(74) Representative: Cosenza, Simona
(86) International application number: PCT/IB2009/006678
(87) International publication number: WO 2010/035091

(56) References cited:
- EP-A- 1 093 748
- WO-A-90/10411
- DE-A1-102004 063 285
- DE-U1-202004 006 056
- US-A1- 2005 029 685

## Description

The present invention refers to an automatic group for instantaneous preparation of hot mixtures of liquid food substances and to a machine equipped with such a group.

In particular the present invention refers to a group which can instantly and automatically make "high quality" hot chocolate as well as panna cotta, sauces, etc., or rather any hot mixtures which can be made by mixing and heating liquid food substances.

By "high quality hot chocolate" mentioned above, we mean chocolate which is not obtained in the usual way by adding instant powder to hot water, but rather all the chocolate made in a traditional manner by using chocolate powder and milk.

And by "instantaneous preparation" we mean that the group and the relative machine object of the present invention do not provide for dispensing a pre-prepared hot mixture but rather make such a hot mixture on the spot and in the desired amount.

Nowadays, high quality chocolate is generally prepared in a semi-manual manner by adding the chocolate powder to a certain amount of milk and subsequently mixing it all by hand making sure to dissolve all possible lumps of chocolate.

Disadvantageously, it is common experience that such an aforementioned procedure, although easy to understand, is not easy to carry out.

At the end of the manual mixing procedure it is necessary to heat, or bring the mixture obtained to a boil, according to the situation.

Generally, such a heating step is carried out by either placing a suitable container of the mixture, onto the heat source or by introducing pressurized vapour into the mixture itself through a nozzle, said mixture having previously been prepared by hand.

However, even such a heating procedure through a vapour nozzle, which nowadays is the most commonly used procedure in bars where such vapour dispensing nozzles are already installed, has the drawback of requiring the worker to carry out some manual operations and it also prevents the worker from doing anything else until such an activity is finished.

Alternatively, for preparing high quality chocolate, devices are used which do not prepare the chocolate but only provide for dispensing a pre-prepared mixture that has been kept warm, thus not prepared on the spot.

Such machines require substantial amounts of chocolate powder and milk in order to prepare great amounts of product before it is requested and then only subsequently dispensed in the required doses.

Such a machine mentioned above also has substantial drawbacks, apart from providing a product which is of lower quality with respect to an analogous one prepared on the spot, including not allowing a practical, fast and safe cleaning of the machine which dispenses the product itself.

Indeed, in such machines the product transits in ducts inside the machine itself, and are therefore difficult to reach, leaving residue which is difficult to remove even if washing the ducts with washing cycles with hot water and/or detergent. DE 20 2004 0060056 discloses a device for preparation of hot mixtures of liquid food substances according to the preamble of claim 1.

The purpose of the present invention is that of making an automatic group for instantaneous preparation of hot mixtures of liquid food substances and a machine equipped with such a group able to solve the aforementioned drawbacks of the prior art in an extremely easy, cost-effective and particularly functional manner.

Another purpose is that of making an automatic group for instantaneous preparation of hot mixtures of liquid food substances and a relative machine equipped with such a group which allow such hot mixtures, such as high quality chocolate but also panna cotta, sauce, etc., to be made, on the spot and automatically, requiring only the single manual operation of pouring the right doses of substances in a relative container.

Another purpose is that of making an automatic group for instantaneous preparation of hot mixtures of liquid food substances and a relative machine equipped with such a group which is able to carry out, separately and/or simultaneously, in a fully automatic way the functions of:
- grinding the solid substances, such as chocolate;
- mixing the liquid substances; such as milk with the ground chocolate powder; and
- heating the mixture, such as the mixed milk and chocolate powder, with vapour.

Another purpose is that of making an automatic group for instantaneous preparation of hot mixtures of liquid food substances and a relative machine equipped with such a group which is easy and practical to disassemble and wash.

Yet another purpose is that of making an automatic group for instantaneous preparation of hot mixtures of liquid food substances and a relative machine equipped with such a group in which the movement of the rotating members suitable for mixing the substance is not affected by the dispensing of vapour.

These purposes, according to the present invention, are achieved by making an automatic group for instantaneous preparation of hot mixtures of liquid food substances and a machine equipped with such a group as outlined in claims 1, and 7, respectively.

Further characteristics of the invention are highlighted in the dependent claims.

The characteristics and advantages of an automatic group for instantaneous preparation of hot mixtures of liquid food substances according to the present invention and of a machine equipped with such a group shall become clearer from the following description, given as an example and not for limiting purposes, referring to the attached schematic drawings, in which:
figure 1 is a section view of a first embodiment of an automatic group for instantaneous preparation of hot mixtures of liquid food substances according to the present invention mounted on a relative machine;
figure 2 is a section view of the automatic group of figure 1 disassembled from the relative machine; figures 2b-2d show elements of the automatic group of figure 1;
figure 3 is a section view of mounting elements of the automatic group of figure 1 on the relative machine;
figure 4 is a section view of a second embodiment of an automatic group for instantaneous preparation of hot mixtures of liquid food substances according to the present invention;
figure 5 is a section view of the automatic group of figure 1 ready to be used; and
figure 6 is a perspective view of a machine provided with an automatic group of figure 1.

With reference to the figures, an automatic group for instantaneous preparation of hot mixtures of liquid food substances is indicated with reference numeral 10 and a machine equipped with such a group 10 is indicated with 100.

The automatic group 10 according to the present invention allows the user to instantly make, or rather to prepare only when necessary and in the required amount, hot mixtures of liquid food substances, such as, in particular "high quality" hot chocolate, or rather chocolate which can be made in a traditional way through chocolate powder and milk, but also panna cotta, sauces, etc., or rather, all the hot mixtures which can be made through stirring and heating of liquid food substances.

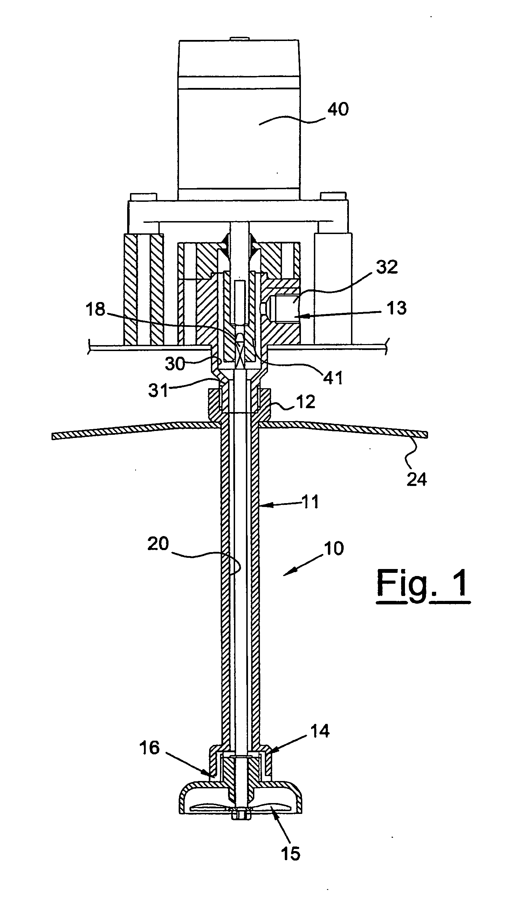

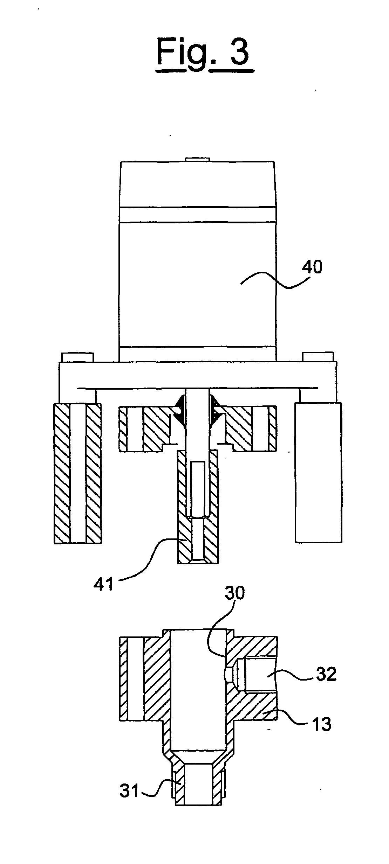

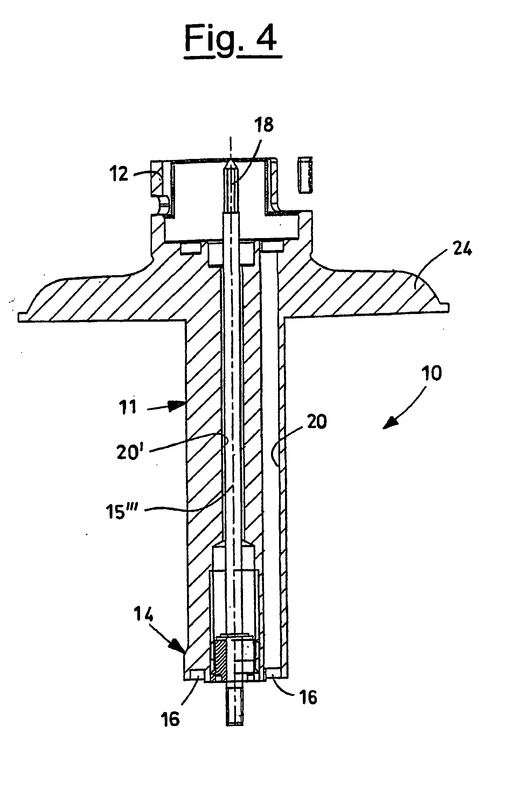

Such an automatic group 10, schematically shown in figures 1-5, comprises a, generally hollow, nozzle element 11 which is equipped with a first end 12, able to be selectively associated with a group for generating vapour 13, possibly under pressure, and with a second opposite free end 14.

In particular the automatic group 10 for instantly making hot mixtures of liquid food substances object of the present invention can be easily mounted onto common bar machines already on the market that generally have a vapour generating group which is associated with one or two attachments for the known vapour dispensing nozzles used for making cappuccino or for heating water or other.

According to what has been mentioned above it should be sufficient to replace the common vapour nozzle of the known bar machines with the aforementioned automatic group 10 to obtain a machine 100 for instantly making hot mixtures of liquid food substances object of the present invention.

When the group 10 is in use, the second free end 14 of the nozzle 11 is suitable for being, at least partially, dipped into liquid food substances to be treated, such as milk and chocolate powder in suitable doses previously arranged in a suitable container 21, possibly graduated so as to facilitate the dosage of the substances to be treated.

Of course it is thus foreseen that both the nozzle 11 as well as all the other elements which come into contact with the liquid food substances to be treated are made with materials not in any way able to damage /spoil the substances to be treated themselves as well as being easy to clean.

As previously mentioned, the vapour generation group 13 can be connected to the nozzle element 11 in a selectively removable manner so as to provide for introducing vapour under pressure into the inner cavity 20 of the nozzle element 11 through its end 12, when required.

According to the invention, the second end 14 of the nozzle element 11, opposite the end 12 into which the vapour is inserted, is provided with means 15 for mixing the liquid food substances to be treated and arranged in the container 21.

Moreover, the second end 14 of the nozzle element 11 is again provided with means 16 for dispensing the vapour introduced by the vapour generating group 13 in the inner cavity 20 of the nozzle element 11.

According to the invention the means 16 for dispensing the vapour introduced by the vapour generating group 13 in the inner cavity 20 and the means 15 for mixing the liquid food substances to be treated and arranged in the container 21 can be actuated independently allowing, according to the needs, modes in which only vapour is dispensed, modes in which only mixing occurs and/or a mode in which mixing and dispensing vapour occur simultaneously.

As schematically shown in figures 1-4 the vapour generating group 13 can comprise a common vapour generator, not shown, and of the known type used nowadays, and at least an element 13' for selectively connecting the first end 12 to the vapour generator and/or to other attachment elements of the relative machine 100.

In particular, the selectively connecting element 13' of the vapour generator which collaborates with the first end 12 comprises an inner cavity 30 connected to a lower end 31 which is shaped so as to be selectively coupled with the first end 12 of the nozzle element 11. Of course an inlet 32 is foreseen, usually on the side, for the vapour to pass from the vapour generator to the cavity 30.

According to the invention the selectively connecting element 13' and the nozzle element 11 are shaped so as to make a reciprocal leak-tight coupling so that all the vapour dispensed is conveyed into the cavity 20 of the nozzle 11.

According to what has been mentioned above, when the group 10 is in use, the vapour transits from the vapour generator in the side inlet 32 until it initially reaches the cavity 30 of the selectively connecting element 13' and subsequently the chamber 20 of the nozzle 11.

Therefore, in such a way, the vapour from the vapour generator can reach and consequently come out from the end 14 of the nozzle 11 coming into contact with the liquid food substances to be treated in which the end 14 itself is at least partially dipped.

According to different embodiments, the selectively connecting element 13' and the nozzle 11 can be removably coupled in a snap-in or threaded manner.

It is thus clear how the nozzle 11 is selectively detachable from the relative machine 100 in a very easy and fast way according to the needs such as, for example, to carry out the cleaning of the nozzle 11 itself, this being the only element that comes into contact with the substances to be treated.

In the embodiment shown in the figures, the mixing means 15 associated with the end 14 of the nozzle 11 suitable for mixing the liquid food substances to be treated, in which the end 14 is at least partially dipped, comprise a bar element 15"' arranged inside the nozzle 11 which extends from the first end 12 to the aforementioned second end 14.

According to two different embodiments, shown in figures 1-3 and 4, respectively, such a shaft element 15"' can be housed in the cavity 20 which receives the vapour or in a second cavity 20' of the nozzle 11 parallel to the previous cavity 20.

At the lower end of the shaft element 15"' at the second end 14 of the nozzle element 11, a mixing element 15' is foreseen, such as a helix or rotating blades or paddles which can possibly be disassembled, at least partially protruding at the second end 14.

In order to protect the aforementioned mixing element 15', the mixing means 15 can also comprise a protecting element 15" of the mixing element 15', such as a cup shaped element 15" which can be coupled with the second end 14, in a snap-in or threaded manner.

In particular such a protection element 15" avoids the user's fingers accidentally making contact with the mixing element 15', as well as avoiding the flow of vapour coming out from the second end 14 of the nozzle 11 affects and/or disturbs the motion of the mixing element 15' creating turbulences at such mixing element 15' itself.

An optimal mixing of the chocolate is indeed required in order to prepare a high quality chocolate.

The upper end 18 of the bar element 15"' opposite the mixing element 15', extends past the end 12 of the nozzle 11 and, in use, it is located at least partially inside the selectively connecting element 13'.

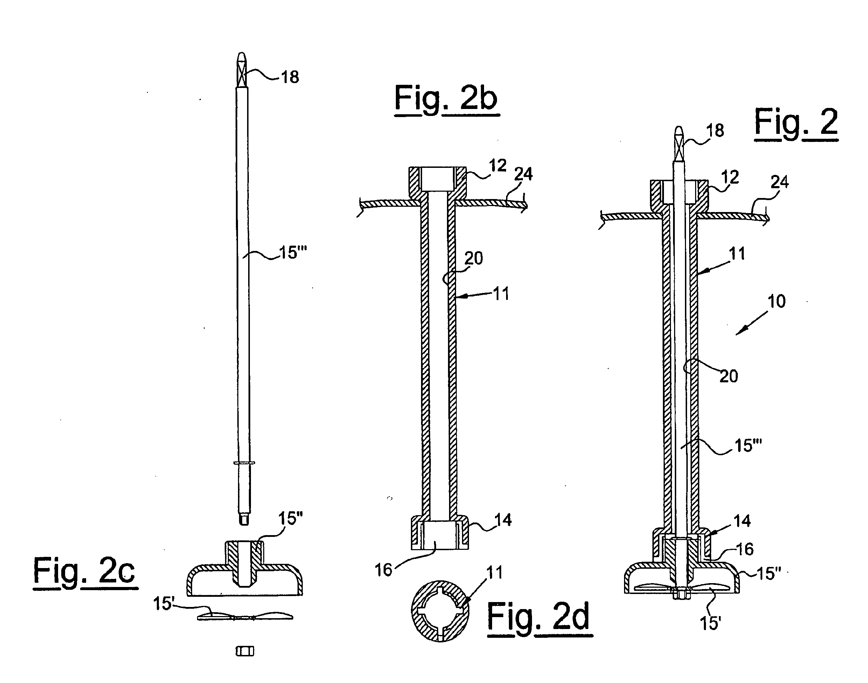

In particular holes 16, which may for example be radial, can be foreseen made as shown in figure 2d in the second end 14 of the nozzle element 11, as dispensing means 16 of the vapour introduced by the vapour generator 13 into the inner cavity of the nozzle element 11.

As can be seen in the figures, according to the invention, the vapour dispensed does not affect and/or disturb the movement of the mixing element 15' both because the holes 16 are preferably formed radially with respect to the nozzle 11 and because the holes 16 themselves are located above the protection element 15" of the mixing element 15'.

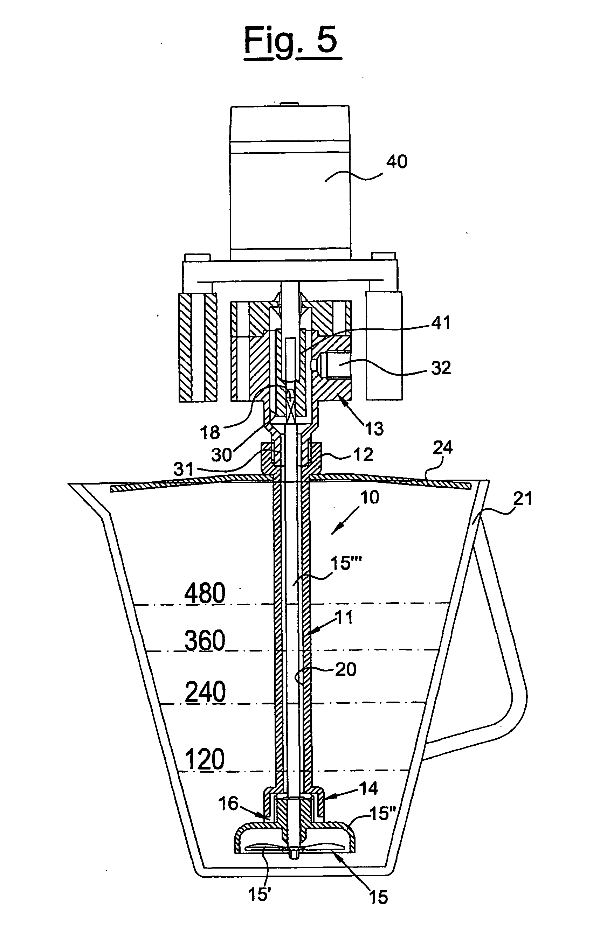

Finally, as shown in figure 5, the automatic group 10 can comprise an umbrella-shaped element 24 at the end 12 which extends radially from the nozzle element 11 so as to prevent the substances to be treated from possibly spilling out when the group 10 itself is in use.

As mentioned previously, the automatic group 10 for instantaneous preparation of hot mixtures of liquid food substances is such as to be able to be easily mounted onto common bar machines instead of a known vapour nozzle present on the market today, alternatively, it is also possible to foresee the development of an automatic machine 100 for instantaneous preparation of hot mixtures of liquid food substances already comprising an automatic group 10 as previously mentioned.

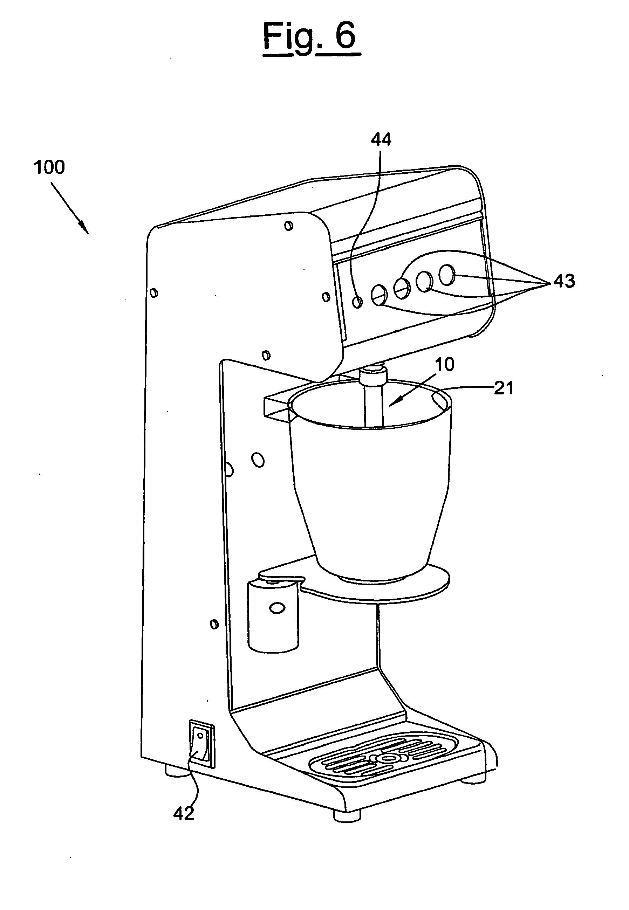

Figure 6 shows an embodiment of such an automatic machine 100 for instantaneous preparation of hot mixtures of liquid food substances which comprises a vapour generator 13, an automatic group 10 as previously described and moving means of the mixing means 15 associated with the nozzle 11.

According to a first embodiment it can be foreseen for the automatic machine 100 to comprise a motor 40 equipped at its lower part with a portion 41 for gripping the end 18 of the bar element 15"', as means for moving the mixing means 15.

In such a way, the motor 40 provides for imparting the desired rotation to the bar element 15"' thus providing to mix the substances in which the end 14 is at least partially dipped, in a suitable/adjustable manner according to the nature and to the doses of substances to be treated as well as only when necessary through the actuation of suitable controls 42, 43 and 44.

It is thus clear how the mixing is completely independent with respect to the dispensing of vapour and is only controlled by the relative motor 40.

Of course, the automatic machine 100 according to the present invention, can also comprise means for fastening the container 21 of the liquid food substances to be treated, such as a lower mobile plate or upper yielding hooks, so as to fix the container 21 in such a position that the second end 14 is dipped into the liquid food substances to be treated.

The controls 42, 43 and 44 previously mentioned can comprise a switch 42 for switching on the machine 100 and at least one button 43 for actuating the automatic group 10, of the relative motor 40 and of the vapour generator 13.

It is even possible to foresee at least one LED 44 for visually signalling the use of the automatic group 10, associated with the at least one button 43.

According to the invention also a plurality of buttons 43 can be foreseen, advantageously able to activate the relative motor 40 and the vapour generator 13 independently or simultaneously according to preset programs, for example, according to the doses of mixture to be made or according to the type of substances to be treated.

Such programs can be previously saved on a microprocessor integrated with the machine 100 itself. The possibility of modifying the saved data on the microprocessor is also foreseen, possibly adding, removing or modifying the preset programs through, for example, suitable cards which can be inserted in corresponding seats made outside of the machine 100.

In such a way, by acting upon the at least one button 43, advantageously according to preset programs, the machine 100 provides for automatically actuating the automatic group 10, the vapour generator and the motor 40 and thus for treating the substance to be prepared arranged in the container 21.

An example of an automatic process that such a machine 100 enables to be carried out can comprise a series of steps in which, initially only the mixing of the liquid food substances to be treated is to be provided for, then there is a subsequent step of heating the same substance through vapour and finally a last step of simultaneously mixing and heating.

It should be absolutely easy to understand how the device, object of the invention, operates.

The automatic group 10 and the relative machine 100 for instantaneous preparation of hot mixtures of liquid food substances, such as high quality chocolate, but also panna cotta, sauces, etc, separately and/or simultaneously carry out in a completely automatic manner, i.e., without requiring a worker to carry out the actions manually, the operations of:
- grinding the solid lumps of substances;
- mixing the liquid substances;
- heating the mixture obtained through vapour.

In particular, all of the aforementioned operations are carried out by the nozzle 11 which has means 15 for mixing the liquid food substances to be treated and means 16 for dispensing vapour, at its free end 14, or rather at the end which is suitable for being at least partially inserted into the mixture to be prepared. According to the invention it is thus sufficient to actuate the nozzle 11 in order to activate a completely automatic process for preparing the desired mixture. The manual operations to be carried out are therefore reduced to:
a) blocking the container 21 with the liquid food substances to be treated in such a position that the second end 14 of the nozzle element 11 is dipped into the liquid food substances to be treated;
b) activating the nozzle 11, for example, through controls 42, 43, 44, said nozzle 11 providing for mixing the liquid food substances through the mixing means 15 and simultaneously or separately heating them through vapour dispensed from the dispensing means 16; and
c) releasing the container 21 once the treatment is finished.

In the case of preparing chocolate, the object of the present invention will thus provide for diluting the chocolate powder in milk and mixing it all simultaneously or separately by introducing vapour so as to cook the chocolate itself.

In particular the arrangement of the holes 16 for dispensing vapour and the presence of the protection element 15" of the mixing element will ensure a correct mixing of the substance to be treated without its mixing motion being affected or disturbed by the dispensed vapour.

It has thus been seen that an automatic group for making hot mixtures of liquid food substances and a machine equipped with such a group according to the present invention obtains the purposes previously highlighted.

Indeed, the automatic group 10 and the relative machine 100 allow hot mixtures of liquid food substances, such as high quality chocolate but also panna cotta, sauces, etc., to be made instantly and automatically requiring only the single manual operation of pouring the right doses of substances themselves into a relative container.

Indeed the automatic group 10 and the relative machine 100 of the present invention carry out, separately or simultaneously and/or in a pre-programmed manner, in a fully automatic manner the functions of:
- grinding the solid substances through the forceful rotation of the paddles or blades;
- mixing of the liquid and solid substances through rotation of the paddles or blades;
- cooking the substances with vapour by introducing vapour under pressure into the substances themselves.

Moreover, the automatic group for making hot mixtures of liquid food substances and the machine equipped with such a group allow the components to be easily and practically washed in a dishwasher or by hand, by removing the nozzle 11, which is the only element which comes into direct contact with the substances to be treated.

Indeed, after every cycle, if necessary, the nozzle 11 can easily be disassembled together with its components and placed in a dishwasher to be washed.

Finally, the correct mixing of the substance to be treated is ensured independently from the dispensing of vapour, with the mixing element "protected" from the vapour itself.

The automatic group for instantaneous preparation of hot mixtures of liquid food substances and the machine equipped with such a group of the present invention thus conceived can undergo numerous modifications and variants, all covered by the same inventive concept; moreover, all the details can be replaced by technically equivalent elements. In practice the material used, as well as the sizes, can be any according to the technical requirements.

## Claims

1. Automatic group (10) for instantaneous preparation of hot mixtures of liquid food substances comprising a hollow nozzle element (11) provided with a first end (12), selectively associable to a vapour generator (13) for the introduction of vapour into an inner cavity (20) of said nozzle element (11), and with a second free end (14) adapted to be dipped into liquid food substances to be treated arranged in a container (21), said second end (14) being provided with means (15) for mixing said liquid food substances to be treated arranged in said container (21) and with means (16) for supplying vapour introduced by said vapour generator (13) in said internal cavity of said nozzle element (11), said mixing means (15) and said vapour dispensing means (16) being able to be actuated independently from one another, said mixing means (15) comprising a bar element (15"') extended from said first end (12) to said second end (14) of said nozzle element (11), a mixing element (15') at said second end (14) and an protecting element (15") of said mixing element (15') associable to said second end (14), said protecting element (15") being a cup shaped element (15") coupled with said second end (14) of said nozzle element (11), **characterized in that** said means (16) for supplying vapour introduced by said vapour generator (13) into said internal cavity of said nozzle element (11) are holes (16) made at said second end (14) of said nozzle element (11), said holes being made above said protection element (15") of said mixing element (15').

2. Automatic group (10) according to claim 1 **characterized in that** it comprises means for selective connection of said first end (12) with said vapour generator (13).

3. Automatic group (10) according to claim 1 **characterized in that** said bar element (15"') is housed in said internal cavity (20) of said nozzle element (11) for the passage of said vapour.

4. Automatic group (10) according to claim 1 **characterized in that** said bar element (15"') is housed in a second internal cavity (20') of said nozzle element (11) parallel to said internal cavity (20) of said nozzle element (11) for the passage of said vapour.

5. Automatic group (10) according to claim 1 **characterized in that** it comprises an umbrella-shaped element (24) which extends out radially from said nozzle element (11) at said first end (12).

6. Automatic machine (100) for preparing hot mixtures of liquid food substances comprising a vapour generator (13), an automatic group (10) according to any one of the previous claims selectively removable and means for moving said mixing means (15), said means for moving said mixing means (15) comprising a motor acting at said first end (12) of said nozzle element (11) on said shaft element (15"'), said motor and said vapour generator (13) being able to be actuated independently.

7. Automatic machine (100) according to claim 6 **characterized in that** it comprises means for blocking a container (21) of said liquid food substances to be treated at such a position that said second end (14) is dipped into said liquid food substances to be treated.

## Patentansprüche

1. Automatisches Aggregat (10) zur sofortigen Zubereitung von heißen Mischungen aus flüssigen Nahrungsmitteln, umfassend ein hohles Düsenelement (11), ausgestattet mit einem ersten Ende (12), das wahlweise mit einem Dampferzeuger (13) zur Einführung von Dampf in einen inneren Hohlraum (20) des Düsenelements (11) verbunden werden kann, und mit einem zweiten, freien Ende (14), das dazu geeignet ist, in die zu behandelnden, in einem Behälter (21) vorgesehenen, flüssigen Nahrungsmittel eingetaucht zu werden, wobei das zweite Ende (14) mit Mitteln (15) zum Mischen der zu behandelnden, in einem Behälter (21) vorgesehenen, flüssigen Nahrungsmittel und mit Mitteln (16) zur Speisung des durch den Dampferzeuger (13) in den inneren Hohlraum des Düsenelements (11) eingeführten Dampfes versehen ist, wobei die Mischmttel (15) und die Dampfeinspeisungsmittel (16) dazu geeignet sind, unabhängig voneinander betätigt zu werden, wobei die Mischmittel (15) ein Stangenelement (15"'), das sich vom ersten Ende (12) zum zweiten Ende (14) des Düsenelements (11) erstreckt, ein Mischelement (15') am zweiten Ende (14) und ein Schutzelement (15") für das Mischelement (15') umfasst, das mit dem zweiten Ende (14) verbunden werden kann, wobei das Schutzelement (15") ein tassenförmiges Element (15") ist, das mit dem zweiten Ende (14) des Düsenelements (11) verbunden ist, **dadurch gekennzeichnet, dass** die Mittel (16) zur Einspeisung des vom Dampferzeuger (13) in den inneren Hohlraum des Düsenelements (11) eingeführten Dampfes Löcher (16) sind, die am zweiten Ende (14) des Düsenelements (11) angebracht sind, wobei die Löcher über dem Schutzelement (15") des Mischelements (15') angebracht sind.

2. Automatisches Aggregat (10) nach Anspruch 1, **dadurch gekennzeichnet, dass** es Mittel zur wahlweisen Verbindung des ersten Endes (12) mit dem Dampferzeuger (13) umfasst.

3. Automatisches Aggregat (10) nach Anspruch 1, **dadurch gekennzeichnet, dass** das Stangenelement (15"') im inneren Hohlraum (20) des Düsenelements (11) für den Durchlass des Dampfes untergebracht ist.

4. Automatisches Aggregat (10) nach Anspruch 1, **dadurch gekennzeichnet, dass** das Stangenelement (15"') in einem zweiten inneren Hohlraum (20') des Düsenelements (11) parallel zum inneren Hohlraum (20) des Düsenelements (11) für den Durchlass des Dampfes untergebracht ist.

5. Automatisches Aggregat (10) nach Anspruch 1, **dadurch gekennzeichnet, dass** es ein schirmförmiges Element (24) umfasst, das am ersten Ende (12) radial aus dem Düsenelement (11) hinausragt.

6. Automatisches Aggregat (100) für die Zubereitung von heißen Mischungen aus flüssigen Nahrungsmitteln, umfassend einen Dampferzeuger (13), ein automatisches Aggregat (10) nach einem beliebigen der vorstehenden Ansprüche, das wahlweise entfernt werden kann, und Mittel zum Bewegen der Mischmittel (15), umfassend einen Motor, der am ersten Ende (12) des Düsenelements (11) auf das Wellenelement (15"') wirkt, wobei der Motor und der Dampferzeuger (13) in der Lage sind, unabhängig voneinander betätigt zu werden.

7. Automatisches Aggregat (100) nach Anspruch 6, **dadurch gekennzeichnet, dass** es Mittel zum Sperren eines Behälters (21) mit den zu behandelnden, flüssigen Nahrungsmitteln in einer derartigen Stellung umfasst, dass das zweite Ende (14) in die zu behandelnden, flüssigen Nahrungsmittel eingetaucht wird.

## Revendications

1. Groupe automatique (10) pour la préparation instantanée de mélanges chauds de substances alimentaires liquides comprenant un élément de buse creux (11) pourvu d'une première extrémité (12), associable sélectivement avec un générateur de vapeur (13) pour l'introduction de vapeur dans une cavité interne (20) dudit élément de buse (11), et d'une deuxième extrémité libre (14) adaptée pour être immergée dans des substances alimentaires liquides à traiter disposées dans un récipient (21), ladite deuxième extrémité (14) étant munie de moyens (15) pour mélanger lesdites substances alimentaires liquides à traiter disposées dans ledit récipient (21) et de moyens (16) pour délivrer de la vapeur introduite par ledit générateur de vapeur (13) dans ladite cavité interne dudit élément de buse (11) ; lesdits moyens de mélange (15) et lesdits moyens de distribution de vapeur (16) étant adaptés pour être actionnés indépendamment les uns des autres, lesdits moyens de mélange (15) comprenant un élément de barre (15"') s'étendant de ladite première extrémité (12) à ladite deuxième extrémité (14) dudit élément de buse (11), un élément mélangeur (15') au niveau de ladite deuxième extrémité (14) et un élément de protection (15") dudit élément mélangeur (15') associable à ladite deuxième extrémité (14), ledit élément de protection (15") étant un élément en forme de coupelle (15") couplé à ladite deuxième extrémité (14) dudit élément de buse (11), **caractérisé en ce que** lesdits moyens (16) pour délivrer de la vapeur introduite par ledit générateur de vapeur (13) dans ladite cavité interne dudit élément de buse (11) sont des trous (16) réalisés au niveau de ladite deuxième extrémité (14) dudit élément de buse (11), lesdits trous étant réalisés au-dessus dudit élément de protection (15") dudit élément mélangeur (15').

2. Groupe automatique (10) selon la revendication 1, **caractérisé en ce qu'**il comprend des moyens pour la connexion sélective de ladite première extrémité (12) avec ledit générateur de vapeur (13).

3. Groupe automatique (10) selon la revendication 1, **caractérisé en ce que** ledit élément de barre (15"') est logé dans ladite cavité interne (20) dudit élément de buse (11) pour le passage de ladite vapeur.

4. Groupe automatique (10) selon la revendication 1, **caractérisé en ce que** ledit élément de barre (15"') est logé dans une deuxième cavité interne (20') dudit élément de buse (11) parallèle à ladite cavité interne (20) dudit élément de buse (11) pour le passage de ladite vapeur.

5. Groupe automatique (10) selon la revendication 1, **caractérisé en ce qu'**il comprend un élément en forme de parapluie (24) qui s'étend radialement vers l'extérieur à partir dudit élément de buse (11) au niveau de ladite première extrémité (12).

6. Machine automatique (100) pour la préparation de mélanges chauds de substances alimentaires liquides comprenant un générateur de vapeur (13), un groupe automatique (10) selon l'une quelconque des revendications précédentes extractible sélectivement et des moyens pour déplacer lesdits moyens de mélange (15), lesdits moyens pour déplacer lesdits moyens de mélange (15) comprenant un moteur agissant à ladite première extrémité (12) dudit élément de buse (11) sur ledit élément d'arbre (15"'), ledit moteur et ledit générateur de vapeur (13) étant adaptés pour être actionnés indépendamment.

7. Machine automatique (100) selon la revendication 6, **caractérisée en ce qu'**elle comprend des moyens pour bloquer un récipient (21) desdites substances alimentaires liquides à traiter dans une position telle que ladite deuxième extrémité (14) soit immergée dans lesdites substances alimentaires liquides à traiter.
